# EUROPEAN PATENT APPLICATION

(11) **EP 3 090 895 A1**
(43) Date of publication of application: **09.11.2016**
(21) Application number: 14885979.6
(22) Date of filing: 27.10.2014
(51) Int. Cl.: B60N 2/16

(54) **SEAT LIFTER FOR VEHICULAR SEAT**

(30) Priority: 20.03.2014 JP 2014057378
(71) Applicant: TACHI-S CO., LTD., Akishima-shi, Tokyo 196-8611 (JP)
(72) Inventor: YAMAMOTO Hiromi, Akishima-shi Tokyo 196-8611 (JP)
(74) Representative: Prüfer & Partner mbB Patentanwälte · Rechtsanwälte
(86) International application number: PCT/JP2014/078438
(87) International publication number: WO 2015/141048

(57) **Abstract**

In a structure in which loss of threaded engagement of a pinion gear and a sector gear is prevented by maintaining the pinion gear and the sector gear in a state of threaded engagement using a bracket, an increase in structural complexity is unavoidable. Thus, an oblong hole (36a) of an arc shape is formed about a stabilizer (34) in a sector gear (36), an inner edge of the oblong hole is provided with teeth, and a pinion gear (38b) is inserted in the oblong hole and engaged with the teeth on the edge of the oblong hole. As the left and right ends of the oblong hole of the sector gear abut on the pinion gear (38b) inserted in the oblong hole, swinging of the sector gear is limited. Further, an end (38b') of the pinion gear protruding from the oblong hole (36a) of the sector gear is provided with a stepped reduced-diameter portion, with a nut (38e) threadedly mounted to a male screw formed on the reduced-diameter portion, and a stopper is held between the nut and the step at the end of the pinion gear to prevent movement of the sector gear in a direction away from the pinion gear.

## Description

### BACKGROUND OF THE INVENTION

### 1. Field of the Invention

The present invention relates to a seat lifter for vehicle seat (vehicular seat), which is designed to be arranged between the seat riser and the seat cushion in order to move the seat cushion up and down with respect to the seat riser.

### 2. Description of the Related Art

The seat lifer is configured to move the seat cushion up and down with respect to the seat riser, thereby to adjust the height of the seat, and is arranged below the seat cushion of vehicle such as an automobile. The seat lifter has front height links on the left and right sides, and rear height links on the left and right sides. More precisely, the front height links are provided in pair, respectively on the left and right sides of the seat frame, and the rear height links are provided in pair, respectively on the left and right sides of the seat frame. Each pair is arranged between the seat riser on the vehicle floor and the seat frame of the seat cushion. The seat lifer further has a drive member such as a drive lever. As the drive member is operated, the rear height links (i.e., rear links) are swung. In accordance with the swing angle of the rear links, the seat cushion is moved up or down. The height of the seat is thereby adjusted.

A stabilizer (connecting rod) extends between the left and right side frames of the seatback frame, and left and right rear links are connected to the left and right ends of the stabilizer, respectively. Further, a sector gear is fixed to the outer end of the stabilizer. Thus, the rear link, the stabilizer and the sector gear form an integral component. The sector gear meshes with a pinion gear that may be driven as the drive lever is swung. Therefore, if the drive lever is operated and the pinion gear is thereby driven, the sector gear will be driven together with the pinion gear. As the sector gear is driven, the stabilizer is rotated, swinging the rear link. As a result, the seat cushion is moved up or down.

The sector gear has an elongated hole arcing around the stabilizer. A stopper pin extends from the seat frame and is inserted in the elongated hole. Hence, the swinging of the sector gear is limited when the stopper pin abuts on the left or right end of the elongated hole.

Two front links (i.e., front height links) may be coupled by connecting rods to the rear links, respectively, to move as the rear links move. Alternatively, the front links may not be coupled to the rear links, and may therefore be free links. If the front links are coupled by connecting rods to the rear links, they swing in unison with the rear links, moving the seat cushion up or down. If the front links are not coupled to the rear links, the rear links swing, moving the seat cushion up or down, and the front links swing as the seat cushion moves up or down.

Assume that an impact is applied to the vehicle due to a rear collision or the like, deforming the seat frame. In this case, the pinion gear and the sector gear may disengage from each other.

In view of this, the distal end of the stopper pin, which protrudes from the elongated hole, usually has a large diameter portion which is larger than the width of the elongated hole, to prevent the sector gear from moving away from the pinion gear (see, for example, JP 2010-052452A) In this configuration, the stopper, whose distal end has the large diameter portion, not only limits the swinging (swing range) of the sector gear, but also prevents the sector gear from moving away from the pinion gear.

In the configuration disclosed in JP 2011-046357A, a stopper pin is inserted in the elongated hole of a sector gear, limiting the swinging of the sector gear, and the distal end of the stopper pin protrudes from the elongated hole. A bracket is mounted on the seat frame and coupled to the distal end of the stopper pin, thus arranged between the seat frame and the stopper pin. The pinion gear is coupled, at distal end, to the bracket and can rotate with respect to the bracket.

Coupled to the distal end of the stopper pin, the bracket functions as large diameter portion, and prevents the sector gear from moving away from the pinion gear.

Patent Literature 1: Japanese Patent unexamined Publication JP 2010-052452A
Patent Literature 2: Japanese Patent unexamined Publication JP 2011-046357A

In the configuration of JP 2011-046357A, the bracket is coupled to the distal end of the stopper pin and functions as large diameter portion, preventing the sector gear from moving away from the pinion gear. Further, the bracket supports the distal end of the pinion gear, allowing the same to rotate, and the pinion gear and the sector gear are held between the bracket and the seat frame.

In this configuration, the bracket keeps the pinion gear and the sector gear in mesh, preventing the gears from disengaging from each other.

However, the bracket must have a supporting hole for supporting the distal end of the pinion gear and allowing the same to rotate, and also a holding hole for holding the stopper pin. In addition, the bracket is mounted on the seat frame and the stopper pin, and is arranged between the seat frame and the stopper pin, while supporting the distal end of the pinion gear and enabling the pinion gear to rotate. Inevitably, the configuration is complicated.

An object of the invention is to provide a seat lifter for the vehicle seat, which is simple in configuration and in which the pinion gear and the sector gear are prevented from disengaging from each other.

### SUMMARY OF THE INVENTION

In this invention, the sector gear has an elongated hole and teeth formed on the edge of the elongated hole. Further, the distal end of the pinion gear protrudes from the elongated hole, the pinion gear is set in mesh with the sector gear, and a stopper is provided at the distal end of the pinion gear.

According to one aspect of the embodiment of claim 1, a seat lifter for vehicle seat comprises a pair of front links and a pair of rear links, to be arranged between a seat riser provided on a vehicle floor and a seat frame provided under the vehicle seat and to swing therebetween; a stabilizer having left and right ends to which the left and right rear links are fixed, respectively; a sector gear fixed to the left or right end of the stabilizer; and a driving means to be provided on the seat frame, having a pinion gear meshed with the sector gear and a drive member configured to drive the pinion gear when the drive member is operated and the pinion gear is driven, thereby to swing the rear links in unison with the sector gear, ultimately to adjust the height of the seat; characterized in that the sector gear has an elongated hole arching around the stabilizer, teeth are cut in an edge of the elongated hole, the pinion gear is inserted in the elongated hole and meshed with the teeth cut in the edge of the elongated hole, and a distal end of the pinion gear protrudes from the elongated hole, and a stopper is provided at the distal end of the pinion gear to prevent the sector gear from moving away from the pinion gear.

In the invention of one aspect of the embodiment of claim 1, the pinion gear is inserted in the elongated hole of the sector gear, and is meshed with the teeth formed on the edge of the elongated hole. Therefore, when the left or right end of the elongated hole abuts on the pinion gear, the swinging of the sector gear is limited. The pinion gear thus acts also as a stopper pin, limiting the swinging of the sector gear. Hence, no stopper pins need be used as independent members.

Moreover, the stopper provided at the distal end of the pinion gear can keep the pinion gear and the sector gear in mesh. Therefore, no brackets must be used to keep the pinion gear and the sector gear in mesh. That is, brackets need not be used at all, and a simple structure suffices to prevent the pinion gear and the sector gear from being disengaged from each other.

### BRIEF DESCRIPTION OF THE DRAWINGS

FIG. 1 is a partial left side view of a vehicle seat that incorporates a seat lifter according to an embodiment of the present invention;
FIG. 2A is a perspective view of the left end of the stabilizer of the seat lifter, not showing the stopper to simplify the drawing;
FIG. 2B is a front view of a sector gear, not showing the stopper to simplify the drawing;
FIG. 3A is a side view showing the rear link, sector gear and stabilizer integrated together;
FIG. 3B is a front view of the sector gear as viewed in the direction of line B-B shown in FIG. 3A;
FIG. 3C is a schematic front view of the rear link as viewed in the direction of line C-C shown in FIG. 3A;
FIG. 4 is a sectional view taken alone line X-X shown in FIG. 2B and showing a stopper.

### DETAILED DESCRIPTION OF THE INVENTION

In one aspect of the embodiments, a seat lifter for vehicle seat comprises a pair of front links and a pair of rear links, to be arranged between a seat riser provided on a vehicle floor and a seat frame provided under the vehicle seat and to swing therebetween; a stabilizer having left and right ends to which the left and right rear links are fixed, respectively; a sector gear fixed to the left or right end of the stabilizer; and a driving means to be provided on the seat frame, having a pinion gear meshed with the sector gear and a drive member configured to drive the pinion gear when the drive member is operated and the pinion gear is driven, thereby to swing the rear links in unison with the sector gear, ultimately to adjust the height of the seat; characterized in that the sector gear has an elongated hole arching around the stabilizer, teeth are cut in an edge of the elongated hole, the pinion gear is inserted in the elongated hole and meshed with the teeth cut in the edge of the elongated hole, and a distal end of the pinion gear protrudes from the elongated hole, and a stopper is provided at the distal end of the pinion gear to prevent the sector gear from moving away from the pinion gear.

### [Embodiment]

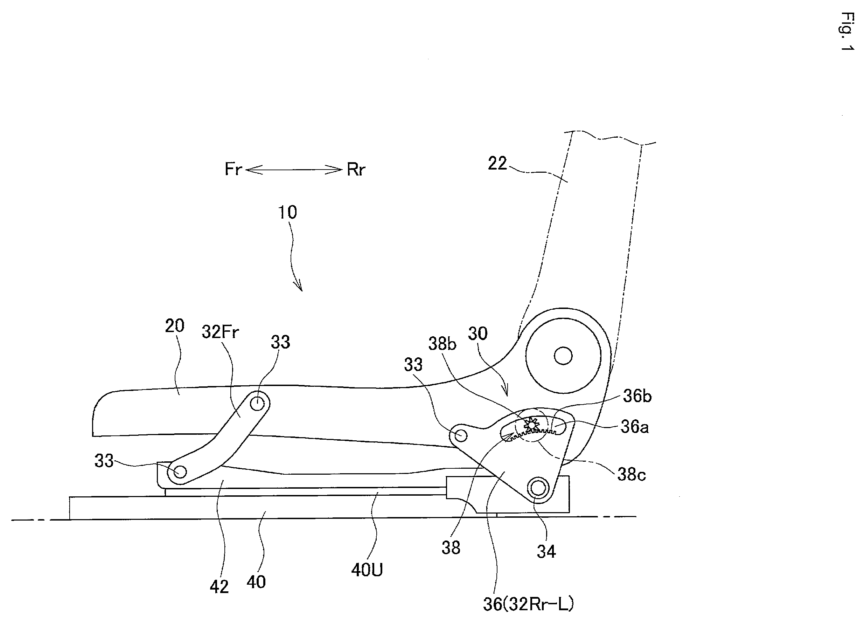

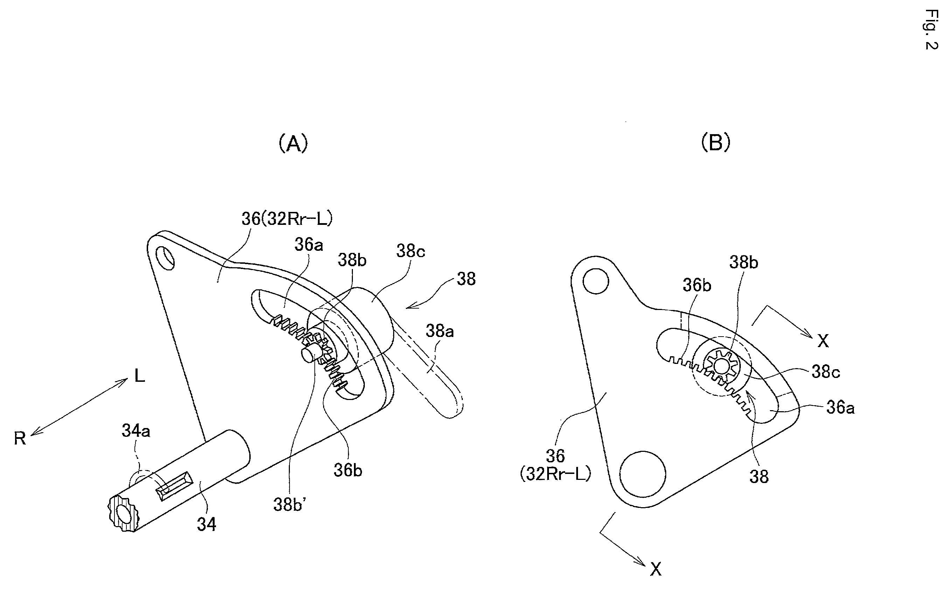

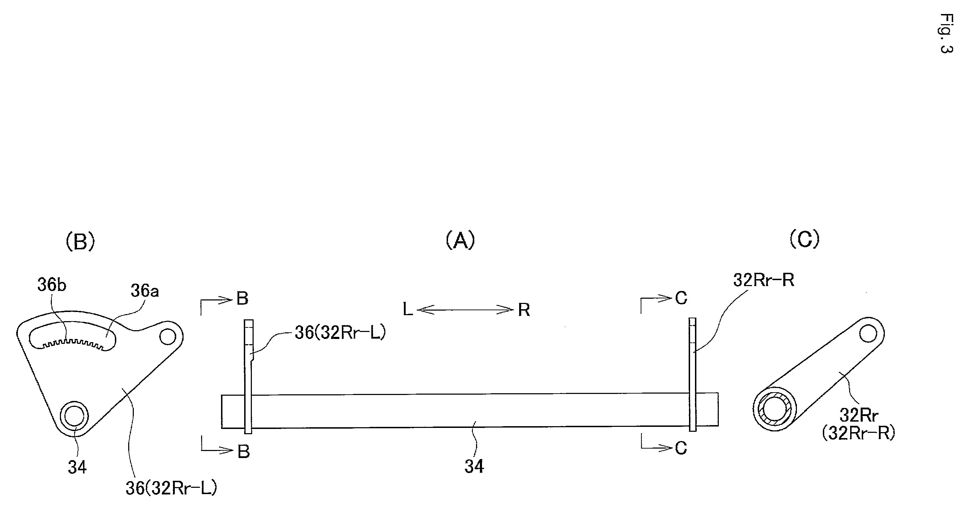

Embodiments of this invention will be described with reference to the accompanying drawings. FIG. 1 is a partial left side view of a vehicle seat that incorporates a seat lifter according to an embodiment of the present invention; FIG. 2A is a perspective view of the left end of the stabilizer of the seat lifter, not showing the stopper to simplify the drawing; FIG. 2B is a front view of a sector gear, not showing the stopper to simplify the drawing; FIG. 3A is a side view showing the rear link, sector gear and stabilizer integrated together; FIG. 3B is a front view of the sector gear as viewed in the direction of line B-B shown in FIG. 3A; and FIG. 3C is a schematic front view of the rear link as viewed in the direction of line C-C shown in FIG. 3A.

As shown in FIG. 1, the vehicle seat 10 comprises two seat frames, i.e., a seat cushion frame (seat frame) 20 and a seatback frame 22. The seatback frame 22 is coupled, at lower edge, to the rear edge of the seat frame 20 by means of a reclining device. Needless to say, a seat pad is mounted on the seat frame 20 and seatback frame 22 (skeleton members), respectively, and covered with a trim cover, whereby a seat cushion and a seatback are constituted.

The seat 10 further comprise a seat lifter (height mechanism) 30 that is designed to move the seat frame 20 up and down to adjust the height of the seat cushion or the seat. More precisely, a seat riser (seat base) 42 is fixed to the left and right upper rails (movable rails) 40U of slide rail that is laid on the floor of the vehicle. The seat lifter 30 is located between the seat riser and the seat frame (i.e., cushion frame). The seat frame is moved up or down with respect to the seat riser to adjust the height of the seat 10.

The seat lifter 30 comprises a pair of front height links (left and right front height links) 32Fr, a pair of rear height links (left and right rear height links) 32Rr, a stabilizer 34, a sector gear 36, and a drive means 38.

The left and right front height links 32Fr are connected (pinned), at lower end, to the seat riser 42, and at upper end to the seat frame 20, by means of, for example, pivotal pins 33, enabling the front height links to swing. The front height links 32Fr can therefore swing. Similarly, the rear height links 32Rr are pinned, at upper end, to the seat frame 20 by means of pivotal pins 33, enabling the rear height links to swing.

For example, the stabilizer 34 is connected to the rear edges of the seat riser 42, and can rotate with respect to the seat riser 42. The left and right rear height links 32Rr are fixed to the left and right ends of the stabilizer, respectively.

The stabilizer 34 may be provided between the rear ends of the seat frame, not between the rear ends of the seat riser 42. If the stabilizer is provided between the rear ends of the seat frame 20, the upper ends of the left and right rear links 32Rr are fixed to the left and right ends of the stabilizer 34. In this case, the rear links are pinned, at lower ends, to the seat riser.

In FIG. 2A, reference number 34a indicates a torsion spring for exerting a torque (torsion) on the stabilizer 34 to move the seat frame 20 upward. The distal end of the torsion spring 34a may be engaged in the recess made on the outer surface of the stabilizer 34. The torsion spring 34a may, of course, extend inside the stabilizer 34, and a recess may be made on the inner surface of the stabilizer. The distal end of the torsion spring may therefore be engaged in the recess of the stabilizer.

In the embodiment, one of the left and right rear link 32Rr, e.g., left rear link 32Rr-L, has teeth 36b, the sector gear 36 and the left rear link are formed integral, and the sector gear functions as left rear link, too. As shown in FIG. 3A, the right rear link 32Rr-R is coupled to the right end of the stabilizer 34, and the sector gear 36 functioning as left rear link 32Rr-L is fixed to the left end of the stabilizer 34. Thus, the stabilizer 34, right rear link 32Rr-R and sector gear 36 (i.e., left rear link) are formed integral.

The sector gear 36 has an elongated hole 36a arching around the stabilizer 34. The teeth 36b of the sector gear are cut in the inner edge of the elongated hole 36a, i.e., edge close to the stabilizer.

The right rear link 32Rr-R and the sector gear 36 (i.e., left rear link 32Rr-L) are press-formed as in most cases. The rear link and sector gear so formed are fixed to the ends of the stabilizer 34, respectively, either by welding or by forging. The stabilizer 34 may be made of a steel tube. The stabilizer 34, the right rear link and the sector gear therefor provide an integral component.

Nonetheless, the stabilizer 34, the right rear link 32Rr-R and the sector gear 36 may not be welded or forged together. For example, they may be cast in aluminum alloy and the like, in the form of an integral component. Alternatively, the right rear link 32Rr-R, the sector gear 36 and the stabilizer 34 may be formed individually and then combined by casing to form an integral component. In this case, the sector gear 36 is heat-treated, acquiring strength and toughness high enough to rotate the stabilizer 34. The sector gear 36 is then formed integral with the right rear link 32Rr-R and stabilizer 34, by means of casting.

The drive means 38 has a drive member, i.e., drive lever 38a, and a pinion gear 38b. The drive lever 38a can swing. The pinion gear 38b is coaxial with the drive member and meshes with the sector gear 36 (more precisely, with the teeth 36b of the sector gear). The drive means 38 is provided on the seat frame 20 and is located adjacent to the sector gear 30. The pinion gear 38b is inserted into the elongated hole 36a of the sector gear and meshes with the teeth 36b formed on the edge of the elongated hole 36a of the sector gear.

If the drive lever 38a (i.e., drive member) is swung, the pinion gear 38b is driven, and the sector gear 36 is also driven because it meshes with the pinion gear. As a result, a torsion is exerted on the stabilizer 34, rotating the stabilizer, and the sector gear 36 is swung together with the right rear link 32Rr-R. The seat frame 20 is thereby is lifted or lowered, and the height of the seat 10 is thereby adjusted. In place of the drive lever 38a, a drive ring coaxial with the pinion gear 38b and able to rotate may be used as a drive member.

The pinion gear 38b is inserted in the elongated hole 36a of the sector gear and meshes with the teeth 36b provided on the edge of the elongated hole. The left and right ends of the elongated hole abut on the pinion gear. The pinion gear therefore limits the swing (swing range) of the sector gear 36 and functions as a stopper pin. Thus, a stopper pin as another independent member need not be used.

Not only the sector gear 36 serving as the left rear link 32Rr-L, but also the right rear link 32Rr-R is swung as the sector gear is driven. However, the left and right front links 32Fr can swing freely because they are free links. Hence, when the left and right rear links 32Rr are swung, the seat frame 20 is moved up or down, while pulling the front links. As the seat frame 20 is moved up or down, the left and right front links swing. The seat frame 20 is smoothly lifted or lowered as the left and right front links 32Fr, and the left and right rear links 32Rr are swung in unison through the seat frame 20.

The front links 32Fr and the rear links 32Rr may be connected by connecting rods so that the front links may swing in unison with the rear links, not through the seat frame 20.

When the drive lever 38a is operated, the drive force of the drive lever is transmitted to the pinion gear 38b through a clutch. The clutch is housed in a case (clutch case) 38c.

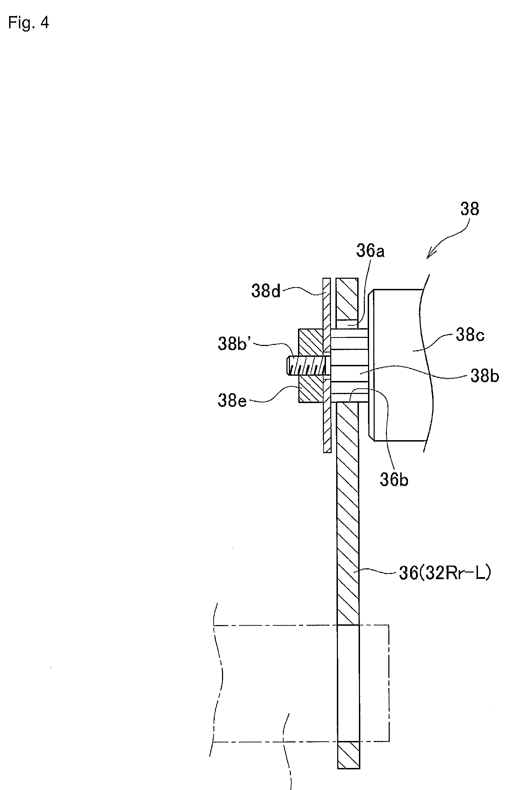

FIG. 4 is a sectional view taken alone line X-X shown in FIG. 2B and showing a stopper.

The pinion gear 38b inserted in the elongated hole 36a of the sector rear and meshing with the teeth 36b has its distal end 38b' protruding from the elongated hole. On the distal end (protruding end) 38b' of the pinion gear, a stopper (stopper plate) 38d is provided and prevents the sector gear from moving away from the pinion gear.

The stopper 38d is, for example, a ring, namely a disc having a center hole. The distal end 38b' of the pinion gear 38b has a step, forming a reduced-diameter portion. A screw (male screw) is made on the distal end 38b', i.e., reduced-diameter portion. The reduced-diameter portion 38b' of the pinion gear 38b is passed through the center hole of the stopper 38d. Then, a nut 38e is set, from the outside of the stopper, in screw engagement with the male screw of the reduced-diameter portion. As a result, the stopper 38d is pushed to the side of the pinion gear 38d and clamped between the nut and the pinion gear, and is thereby mounted on the reduced-diameter portion 38b' of the pinion gear.

Since the stopper 38d is mounted on the distal end (reduced-diameter portion) 38b' of the pinion gear, the sector gear 36 is reliably prevented from moving away from the pinion gear 38b. Thus, the pinion gear 38b and the sector gear 36 can remain in mesh, merely by mounting the stopper 38d on the distal end of the pinion gear. No brackets need be used to keep the pinion gear and the sector gear meshed with each other. That is, a simple structure suffices to prevent disengagement of the pinion gear 38b and the sector gear 36.

The member that sets the stopper 38d to the distal end (reduced-diameter portion) 38b' of the pinion gear is not limited to the nut.

For example, a fastening member, such as push nut or speed nut, may be fastened to the distal end (reduced-diameter portion) of the pinion gear, thereby to hold the stopper 38d at the step of the reduced-diameter portion. An annular groove (engagement groove) may be cut in the distal end (reduced-diameter portion) of the pinion gear, and an engagement member, such as snap ring, snap retainer or clip ring, may be engaged in the annular groove. In this case, the stopper 38d may be held at the step of the reduced-diameter portion and thereby be held at the distal end (reduced-diameter portion) of the pinion gear 38b.

If the engagement member is used, the reduced-diameter portion 38b' of the pinion gear need not be threaded. In this case, the stopper 38d can be held at the distal end of the pinion gear without fitting a nut to the pinion gear.

The stopper 38d may have any size and form so far as it does not pass through the elongated hole 36a of the sector gear, and is not limited to a ring.

As described above, the pinion gear is inserted in the elongated hole of the sector rear. When the left or right end of the elongated hole abuts on the pinion gear, the swinging of the sector gear is limited. Hence, the pinion gear functions as a stopper pin to limit the swinging of the sector gear, and stopper pin need not be used as independent members. Further, the pinion gear and the sector gear can remain meshed with each other, merely by holding the stopper at the distal end of the pinion gear. Thus, no brackets need be used to keep the gears meshed with each other. That is, a simple structure can prevent disengagement of the pinion gear and sector gear.

The embodiments have been described to explain this invention, and are not intended to limit the scope of the invention. Accordingly, various changes and modifications may be made within the spirit or scope of this invention, and are of course included in this invention.

The elongated hole of the sector gear is closed in most cases. However, the elongated hole may be opened at a part if it can reliably prevent the sector gear from moving away from the pinion gear. More specifically, for example, the center part of the outer edge of the elongated hole, i.e., edge far from the stabilizer, which has no teeth, may be cut off as indicated by one-dot, dashed lines in FIG. 2B. Those parts close to the left and right edges of the sector gear, which abut on the pinion gear and limit the swinging thereof, may be cut off. This alternative configuration is included in the present invention.

### INDUSTRIAL APPLICABILITY

This invention is applied generally to vehicle seats for use in buses, automobile and aircraft, in which the seats may receive impacts. Nonetheless, the invention can be applied to seats for use in high-speed vehicles, such as roller coasters or the like.

### REFERENCE MARKS IN THE DRAWINGS

- 10: vehicle seat
- 20: seat cushion frame (seat frame)
- 22: seatback frame
- 30: seat lifter
- 32Fr: front link
- 32Rr: rear link
- 34: stabilizer
- 36: sector gear
- 36a: elongated hole
- 36b: teeth
- 38: drive means
- 38b: pinion gear
- 38b': distal end (protruding end) of the pinion gear
- 38c: case (clutch case)
- 38d: stopper
- 38e: nut
- 42: seat riser

## Claims

1. A seat lifter for vehicle seat, comprising:
a pair of front links and a pair of rear links, to be arranged between a seat riser provided on a vehicle floor and a seat frame provided under the vehicle seat and to swing therebetween;
a stabilizer having left and right ends to which the left and right rear links are fixed, respectively;
a sector gear fixed to the left or right end of the stabilizer; and
a driving means to be provided on the seat frame, having a pinion gear meshed with the sector gear and a drive member configured to drive the pinion gear when the drive member is operated and the pinion gear is driven, thereby to swing the rear links in unison with the sector gear, ultimately to adjust the height of the seat;
**characterized in that** the sector gear has an elongated hole arching around the stabilizer, teeth are cut in an edge of the elongated hole,
the pinion gear is inserted in the elongated hole and meshed with the teeth cut in the edge of the elongated hole, and a distal end of the pinion gear protrudes from the elongated hole, and
a stopper is provided at the distal end of the pinion gear to prevent the sector gear from moving away from the pinion gear.

2. The seat lifter according to claim 1, **characterized in that** the distal end of the pinion gear has a step, forming a reduced-diameter portion, the stopper is held at the step of the pinion gear.

3. The seat lifter according to claim 2, **characterized in that** a nut is set in screw engagement with a male screw made on the reduced-diameter portion of the pinion gear or a fastening member is fastened to the reduced-diameter portion of the pinion gear, thereby holding the stopper at the step of the pinion gear.

4. The seat lifter according to claim 2, **characterized in that** an engagement member is engaged in an annular groove made in the reduced-diameter portion of the pinion gear, thereby holding the stopper at the step of the pinion gear.

5. The seat lifter according to any one of claims 1 to 4, **characterized in that** the sector gear is formed integral with any one of the left and right rear links and functions as the rear link.
